Europäisches Patentamt

European Patent Office

Office européen des brevets

(19)

(11) Veröffentlichungsnummer: **0 461 445 A2**

# (12) EUROPÄISCHE PATENTANMELDUNG

(21) Anmeldenummer: **91108392.1**

(22) Anmeldetag: **24.05.91**

(51) Int. Cl.5: **H04L 25/14**

(30) Priorität: **09.06.90 DE 4018483**

(43) Veröffentlichungstag der Anmeldung:
**18.12.91 Patentblatt 91/51**

(84) Benannte Vertragsstaaten:
**AT BE CH DE DK ES FR GB GR IT LI LU NL SE**

(71) Anmelder: **CONTROLWARE GmbH
KOMMUNIKATIONSSYSTEME
Justus-von-Liebig-Strasse 19c
W-6057 Dietzenbach(DE)**

(72) Erfinder: **Schulz, Oliver, Dipl.-Ing.
Schubertstr. 8
W-6116 Eppertshausen(DE)**

(74) Vertreter: **Weber, Dieter, Dr. et al
Dr. Dieter Weber, Dipl.-Phys., Klaus Seiffert,
Dr. Winfried Lieke, Patentanwälte,
Gustav-Freytag-Strasse 25
W-6200 Wiesbaden 1(DE)**

(54) **Verfahren zur Fernübertragung hoher Datenraten über eine Mehrzahl von Kanälen niedriger Datenraten.**

(57) Die vorliegende Erfindung betrifft ein Verfahren und eine Vorrichtung zur Fernübertragung von Daten, bei welchem zur Erhöhung der Übertragungsgeschwindigkeit in einem Eingangskanal (1) anstehende Daten auf mindestens zwei Übertragungskanäle (20') jeweils begrenzter Übertragungskapazität aufgeteilt, entlang der Übertragungsstrecke übermittelt, synchronisiert empfangen und in der ursprünglichen Anordnung in einen Ausgabekanal (3') gegeben werden, der seinerseits mit einem Speicher oder einer Datenverarbeitungseinrichtung verbunden ist. Um eine höhere Datenübertragungsgeschwindigkeit zu ermöglichen, wobei die Zahl der Übertragungskanäle in weiten Bereichen beliebig variierbar ist, wird erfindungsgemäß vorgeschlagen, daß in allen Übertragungskanälen (20') in fester relativer Zeitbeziehung ein Ausrichtsignal gesendet wird, welchem die Übertragung von Datensignalen folgt, wobei die sich beim Empfang des Ausrichtsignales ergebenden Laufzeitunterschiede in den verschiedenen Übertragungskanälen (20') dadurch berücksichtigt werden, daß nach dem Empfang eines Ausrichtsignales in einem Übertragungskanal (20') die in diesem Übertragungskanal (20') folgenden Daten in einen FIFO-Speicher (50) (First In First Out-Speicher) eingelesen und entsprechend der senderseitig festgelegten Reihenfolge erst dann aus den FIFO-Speichern (50) ausgelesen werden, wenn in allen benutzten Übertragungskanälen (20') das Ausrichtsignal empfangen worden ist.

Fig. 1

Rank Xerox (UK) Business Services

Die vorliegende Erfindung betrifft ein Verfahren zur Fernübertragung von Daten, bei welchem zur Erhöhung der Übertragungsgeschwindigkeit in einem Eingangskanal anstehende Daten auf mindestens zwei Übertragungskanäle jeweils begrenzter Übertragungskapazität aufgeteilt, entlang der Übertragungsstrecke übermittelt, synchronisiert empfangen und in der ursprünglichen Anordnung in einen Ausgabekanal bzw. einen Speicher oder eine Datenverarbeitungseinrichtung gegeben werden.

Ebenso betrifft die vorliegende Erfindung auch eine entsprechende Vorrichtung zur Fernübertragung von Daten, bei welcher eine Aufteilung der in einem Eingangskanal anstehenden Daten auf mindestens zwei Übertragungskanäle jeweils begrenzter Übertragungskapazität erfolgt, mit mindestens einem Datensender und mindestens einem Datenempfänger, mit je einem Interface zur Verbindung der Datenverarbeitungs- bzw. Speichereinrichtung mit dem Übertragungsnetz über den Sender bzw. den Empfänger, mit einer Frequenzvervielfacher-Schaltung und mit mindestens einem (integrierten) Elektronikbaustein zur Ablaufsteuerung.

Bei einem bekannten Verfahren dieser Art und bei einer entsprechenden Vorrichtung werden die zu übermittelnden Daten von einem Mikroprozessor erfaßt, über eine Busleitung auf zwei Kanäle ausgegeben, auf der Empfängerseite wiederum von einem Mikroprozessor erfaßt und analysiert und entsprechend der vorgenommenen Analyse in der ursprünglichen Reihenfolge wieder auf einen Kanal ausgegeben.

Dabei erfolgt die Aufteilung der Daten und auch die entsprechende Analyse nach einem vorgegebenen Programm, welches in den Mikroprozessor eingegeben wurde.

Ein Nachteil dieses bekannten Verfahrens und der entsprechenden Vorrichtung liegt darin, daß sie relativ langsam arbeiten, so daß bisher nur in etwa eine Verdopplung der Übertragungsgeschwindigkeit durch Aufteilen der zu übermittelnden Daten auf zwei Übertragungskanäle möglich war, die zudem noch mit relativ niedrigen Übertragungsgeschwindigkeiten (19 kbaud) arbeiteten.

Außerdem läßt sich ein solches Verfahren und eine entsprechende Vorrichtung, auch wenn sie einen schnelleren Mikroprozessor und gegebenenfalls bessere und schnellere Programme aufweist, nicht ohne weiters auf eine beliebige Anzahl von Übertragungskanälen erweitern oder auf eine jeweils gewünschte Anzahl reduzieren.

Demgegenüber liegt der vorliegenden Erfindung die Aufgabe zugrunde, ein Verfahren und eine Vorrichtung mit den eingangs genannten Merkmalen zu schaffen, welche eine wesentlich höhere Datenübertragungsgeschwindigkeit ermöglichen, wobei die Zahl der Übertragungskanäle in weiten Bereichen beliebig variierbar ist.

Hinsichtlich des Verfahrens wird diese Aufgabe dadurch gelöst, daß in allen Übertragungskanälen in fester relativer Zeitbeziehung ein Ausrichtsignal gesendet wird, welchem die Übertragung von zu übermittelnden Datensignalen folgt, wobei die sich beim Empfang des Ausrichtsignales ergebenden Laufzeitunterschiede in den verschiedenen Übertragungskanälen dadurch berücksichtigt werden, daß nach dem Empfang eines Ausrichtsignales in einem Kanal die in diesem Kanal folgenden Übertragungsdaten in einen FIFO-Speicher (First In First Out-Speicher) eingelesen und entsprechend der senderseitig festgelegten Reihenfolge für die Kanäle erst dann aus dem je einem Übertragungskanal zugeordneten FIFO-Speichern ausgelesen werden, wenn in allen benutzten Übertragungskanälen das Ausrichtsignal empfangen worden ist.

Hinsichtlich der Vorrichtung wird die der Erfindung zugrundeliegende Aufgabe dadurch gelöst, daß senderseitig eine Einrichtung vorgesehen ist, von welcher in alle Kanäle in fester Zeitbeziehung und vorzugsweise gleichzeitig ein Ausrichtsignal ausgebbar ist, daß empfängerseitig für jeden Kanal FIFO-Speicher als Zwischenspeicher vorgesehen sind, wobei eine Einrichtung für das Erfassen eines Ausrichtsignales vorgesehen ist und wobei weiterhin eine Einrichtung vorgesehen ist, welche unter Ansprechen auf das Erfassen des Ausrichtsignales in allen benutzten Übertragungskanälen das Auslesen des FIFO-Inhaltes ansteuert.

In vorteilhafter weiterer Ausgestaltung des vorstehend genannten Verfahrens wird erfindungsgemäß vorgeschlagen, daß das Ausrichtsignal in allen Kanälen im wesentlichen gleichzeitig gesendet wird und daß die zu übertragenden Daten unmittelbar im Anschluß an das Ausrichtsignal gesendet werden.

Dabei schließt der Begriff "im wesentlichen gleichzeitig" eine Zeitspanne ein, die benötigt wird, um gegebenenfalls nacheinander in allen benutzten Übertragungskanälen die entsprechenden Sender anzusteuern.

Dabei wird unter "Sender" eine Einrichtung verstanden, welche Daten zu der benutzten Übertragungsleitung hin abgibt, wobei es nicht darauf ankommt, ob diese Daten bzw. die entsprechenden elektrischen Signale noch zusätzlich oder auf Zwischenstationen der Übertragungsstrecke eine Verstärkung oder Vermittlung erfahren.

Das gleichzeitige Senden des Ausrichtsignales in allen Übertragungskanälen mit unmittelbar daran anschließenden Übertragungsdaten, die in einer vorgegebenen "Wort"- bzw. "Satz"-Länge in je einen Übertragungskanal in einer vorgegebenen Reihenfolge nacheinander eingegeben werden, hat zur Folge, daß die auf das Ausrichtsignal zuerst folgenden Daten auf der Empfängerseite auch jeweils als erste in den je einem Kanal zugeordneten FIFO-Speicher eingelesen werden.

Für das Verständnis der folgenden Beschreibung soll hier angenommen werden, daß die in dem Eingangskanal anstehenden Daten in "Worte" jeweils gleicher Länge aufgeteilt werden, wobei nach dem Senden des Ausrichtsignales je ein Wort als Ganzes entlang eines Übertragungskanales übermittelt wird. Ein Wort kann beispielsweise aus einem Bit, einem Byte oder einem Vielfachen dieser Größen bestehen. Vorzugsweise wird bei der Aufteilung immer die gleiche Wortlänge eingehalten.

Die nacheinander in der Dateneingangsleitung anstehenden Worte werden nun entsprechend einer vorgegebenen Reihenfolge durch die einzelnen Übertragungskanäle übermittelt. Aufgrund von Laufzeitunterschieden in den einzelnen Kanälen kann es dabei jedoch geschehen, daß in einem oder mehreren der Übertragungskanäle bereits mehrere Worte nacheinander empfangen worden sind, die entsprechend ihrer Reihenfolge in den zugehörigen FIFO-Speicher eingelesen werden, bevor in einem anderen Übertragungssignal das Ausrichtsignal und das erste übermittelte Wort ankommt.

Dennoch wird bei dem erfindungsgemäßen Verfahren die Reihenfolge der Eingangsdaten ohne weiteres dadurch eingehalten, daß erst nach dem Empfang der Ausrichtsignale in allen Kanälen mit dem wortweisen Auslesen der FIFO-Speicher entsprechen der gleichen Kanalreihenfolge begonnen wird, die auch senderseitig beim Aufteilen der Worte auf die Kanäle eingehalten wurde. Dabei wird in dem FIFO-Speicher, welcher dem Kanal mit der längsten Übertragungszeit zugeordnet ist, im Regelfall nur ein einziges Wort zum Auslesen anstehen, während in dem Kanal mit der kürzesten Übertragungszeit schon mehrere Worte anstehen können. Das wortweise Auslesen der FIFO-Speicher nacheinander stellt jedoch sicher, daß, nachdem alle FIFO-Speicher mindestens das erste übermittelte Wort aufgenommen haben, zunächst nur dieses erste Wort aus allen FIFO-Speichern nacheinander ausgelesen wird und erst im Anschluß daran das nächste anstehende Wort entsprechend der gleichen Reihenfolge ausgelesen wird, wobei - konstante Laufzeit in jedem der Kanäle vorausgesetzt - immer mindestens ein Wort zum Auslesen in jedem FIFO-Speicher ansteht.

Zweckmäßigerweise erfolgt das Senden der Daten in jedem einzelnen Kanal mit einer aufgeprägten Rahmenstruktur, welche mindestens das Ausrichtsignal und auch weitere Kontrollsignale enthält.

Der Begriff "Rahmenstruktur" umschreibt hier, daß nach einer festen Anzahl von übermittelten Worten ein bestimmter Satz von Steuer- bzw. Kontrolldaten übermittelt wird, der auch das Ausrichtsignal enthält, wobei diese Steuerdaten nicht Teil der im Eingangskanal anstehenden und zu übermittelnden Daten sind und auch nicht auf der Empfängerseite in den FIFO-Speichern abgespeichert werden. Die in Worten angeordneten Daten werden also jeweils blockweise von einem "Rahmen" aus Steuerdaten umfaßt.

Zweckmäßigerweise enthalten dabei die Steuerdaten auch mindestens ein Synchronisiersignal. Der Begriff "Synchronisation" bezieht sich dabei nicht auf die Synchronisation der verschiedenen Übertragungskanäle miteinander, sondern auf die Synchronisation der Daten innerhalb eines Kanals, durch welche festgelegt wird, an welcher Stelle das erste Wort eines Blockes beginnt, welche Wortlänge jedes der Worte hat und wo der Datenblock endet, gibt also auch die Rahmenbreite und gegebenenfalls auch die detaillierte Rahmenstruktur an.

Weiterhin ist in besonderer Ausgestaltung des erfindungsgemäßen Verfahrens vorgesehen, daß die Rahmenstruktur Steuerdaten für sender- oder empfängerseitige Steuerschaltkreise, Signale zum Anzeigen von Differenzen der Taktfrequenz verschiedener Datenkanäle und gegebenenfalls auch Leerdaten zum Ausgleich von Taktfrequenzdifferenzen aufweist.

Besonders bevorzugt wird dabei eine Ausgestaltung des Verfahrens, bei welcher durch die Rahmenstruktur vier Blöcke von je 256 Byte Länge vorgegeben werden, wobei ein erstes Byte eines ersten Blockes das Synchronisationssignal und das Ausrichtsignal enthält und ein erstes Byte eines weiteren Blockes als Zustandsanzeige- und Unterbrechungssignal für einen Steuerschaltkreis dient.

Der Steuerschaltkreis legt den Zugriff zu den einzelnen Kanälen fest, sorgt also senderseitig für die Aufteilung der Daten aus dem Eingangskanal auf die verschiedenen Sendekanäle und steuert empfängerseitig das Auslesen der FIFOs in einen gemeinsamen Ausgabekanal. Durch die Zustandsanzeige- und Unterbrechungssignale werden dem Steuerschaltkreis Rahmenlänge- und Struktur mitgeteilt, damit dieser Rahmendaten von den eigentlichen Übermittlungsdaten trennt und auch die senderseitig vorgegebene Reihenfolge einhält.

Zusätzlich ist erfindungsgemäß vorgesehen, daß das erste Byte eines dritten Blockes eine Anzahl von Leerdatenbytes angibt, die maximal zwei beträgt, wobei diese maximal zwei Bytes zu Beginn eines vierten Blockes stehen, wobei es zweckmäßig ist, wenn dieser vierte Block in der Reihenfolge hinter dem dritten Block liegt, wobei es im übrigen auf die Reihenfolge der genannten vier Blöcke nicht ankommt.

Selbstverständlich sind auch Sende- und Erfassungseinrichtungen für Rückmeldungen vom Empfänger zum Sender vorgesehen, so daß bei auftretenden Fehlern oder Übermittlungsproblemen das Senden unterbrochen oder neu begonnen werden kann oder aber zumindest die Information über einen Übermittlungsfehler vorliegt.

Im übrigen sind die durch die Post bereitgestellten Übermittlungsleitungen bzw. Kanäle zur Fernübertragung von Daten ohnehin sogenannte "Vollduplex"-Leitungen, die ein Senden und Empfangen in beiden Richtungen ermöglichen, so daß das gesamte System zweckmäßigerweise auch symmetrisch aufgebaut ist, also auf beiden Seiten Sender und Empfänger aufweist.

Bei der Vorrichtung hat es sich als zweckmäßig erwiesen, wenn Sender, Empfänger und gegebenenfalls weitere Steuerelemente, z.B. zur Erzeugung und Analyse der Rahmenstruktur, auf einem integrierten Elektronikbaustein angeordnet sind. Derartige integrierte Elektronikbausteine oder kurz "Chips" können sogenannte festverdrahtete Funktionen aufweisen und arbeiten dabei wesentlich schneller, als dies mit der Ausführung entsprechender Funktionen durch eine Programmsteuerung möglich wäre.

Gemäß einer ersten Ausführungsform sind sowohl sender- als auch empfängerseitig je ein integrierter Schaltkreis bzw. ein Chip vorgesehen, der je einen Sender und einen Empfänger mit je einem Dateneingang und einem Datenausgang, einen Takteingang für den Ausgang des Senders und einen Takteingang für den Empfänger sowie Ein- und Ausgänge für Steuerdaten aufweist.

Ein solcher Chip arbeitet als Sender und als Empfänger und enthält sämtliche festverdrahteten Funktionen, die für das Senden und Empfangen einschließlich der vorgegebenen Rahmenstruktur und deren Auswertung und Überwachung erforderlich sind.

Zweckmäßigerweise ist also gemäß einer Ausführungsform der Erfindung jeder Kanal an beiden Enden der Übertragungsstrecke mit je einem solchen Chip ausgerüstet, wobei jeder der Empfängerausgänge an einem FIFO-Speicher liegt.

Außerdem ist eine solche Ausführungsform der Vorrichtung bevorzugt, bei welcher der Sender einen Parallel/Seriellwandler und der Empfänger einen Seriell/Parallelwandler aufweist. Konkret bedeutet dies, daß die in den Sender eingegebenen Daten parallele Daten sein können (beispielsweise in einer Achtfachleitung mit je einer Leitung für ein Bit) ebenso wie auch die vom Empfänger ausgegebenen Daten parallele Daten sind. Der entsprechende FIFO-Speicher speichert dementsprechend auch in einer Breite von acht Bit.

Gemäß einer anderen Ausführungsform der Vorrichtung, welche für die Verwendung im ISDN-Netz ausgelegt ist, sind die FIFO's mehr oder weniger direkt an die Busleitung einer entsprechenden ISDN-Karte angeschlossen, wobei allenfalls noch ein Schieberegister zwischen die FIFO's und die Busleitung geschaltet ist. Dieses Schieberegister dient dann lediglich zur Seriell/Parallelwandlung.

Bei einer solchen Vorrichtung sind keine besonderen Maßnahmen zur Synchronisierung der einzelnen Kanäle erforderlich, da dieses ohnehin schon durch die entsprechenden ISDN-Karten bewerkstelligt wird. Auch die Sende- und Empfangseinrichtungen sind im wesentlichen schon auf den ISDN Karten enthalten. Es ist lediglich eine relativ einfache Steuereinheit erforderlich, welche den Empfang der Ausrichtsignale erfaßt und überwacht und dementsprechend das Auslesen der FIFO-Speicher steuert. Hierzu ist diese Steuereinheit noch an eine zusätzliche Steuerleitung angeschlossen, über welche die Informationen über die Anzahl und Kennzeichnung der ISDN-Kanäle übermittelt werden, welche in einem konkreten Fall für die Übermittlung der Daten verwendet werden. Weiterhin dient diese Steuereinheit auch dazu, den zu sendenden Daten ein Ausrichtsignal voranzustellen, bevor sie in die Busleitung des ISDN-Netzes gegeben werden.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:

Figur 1     schematisch vier Anfangs- bzw. Endpunkte einer Übertragungsstrecke mit einem gemeinsamen Steuerschaltkreis,

Figur 2     einen schematischen Überblick über einen kombinierten Sende- und Empfangschip, welcher an den Enden je eines Übertragungskanals angeordnet ist,

Figur 3     das Blockschaltbild eines in den Chip integrierten Senders,

Figur 4     das Blockschaltbild eines in den Chip integrierten Empfängers,

Figur 5     schematisch die Anwendung des Systems auf das ISDN-Netz und

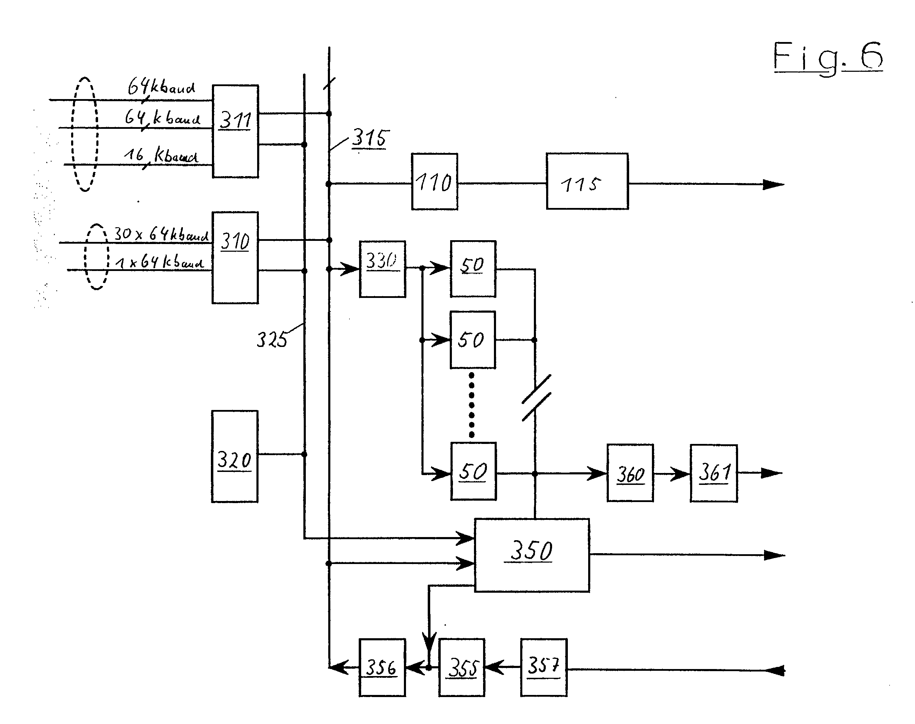

Figur 6     ein detailliertes Blockschaltbild der Vorrichtung für die Anwendung auf das ISDN-Netz.

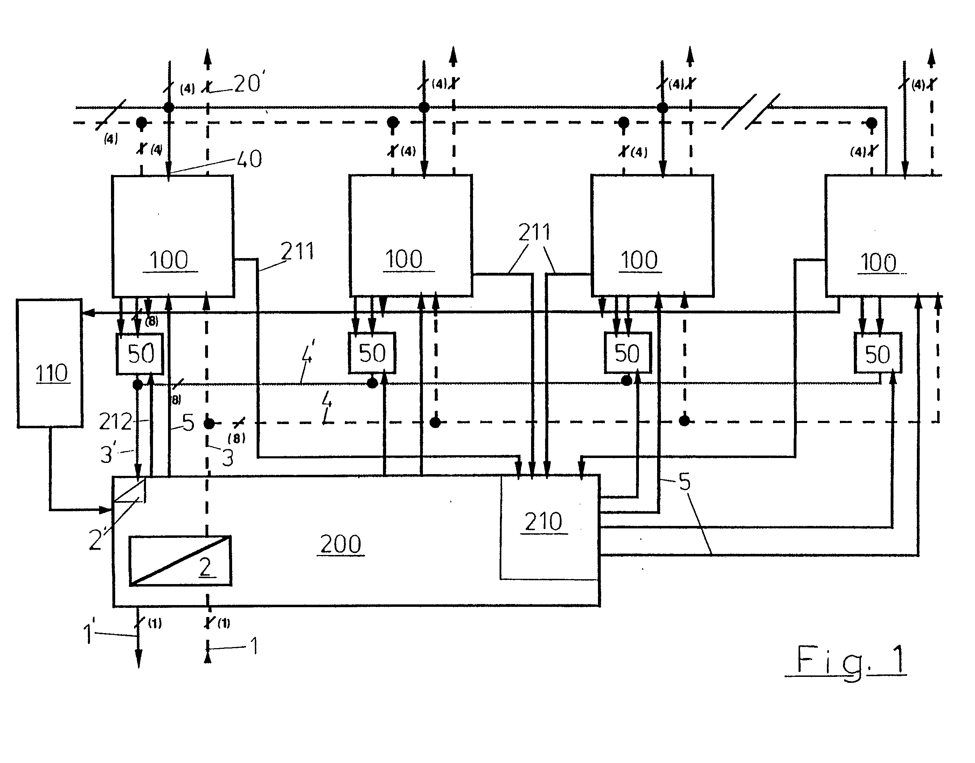

In Figur 1 sind alle Senderleitungen, d.h. alle Leitungen, die Daten transportieren, welche übermittelt werden sollen, gestrichelt gezeichnet, während die Empfangsleitungen, über welche übermittelte Daten empfangen und weitertransportiert werden, mit gezackten Linien dargestellt sind. Desweiteren sind zusätzliche Informations- und Steuerleitungen mit durchgezogenen Linien eingezeichnet.

In Figur 1 erkennt man unten unterhalb des Steuerschaltkreises 200 eine Eingangsleitung 1, die hier eine serielle Datenleitung sein soll und in welcher die zu übermittelnden Daten anstehen. Diese Daten werden zunächst in einen Seriell/Parallelwandler 2 gegeben, der die Daten in einer Breite von acht Bit in einer Achtfachleitung anordnet. Generell werden in den Figuren Mehrfachleitungen zwischen den einzelnen Bausteinen dadurch bezeichnet, daß sie einen Schrägstrich mit einer in Klammern daran angegebenen Zahl aufweisen, wobei die Zahl die Zahl der Leitungen bzw. Kanäle der jeweiligen Leitung angibt. Dies bedeutet jedoch nicht, daß die nicht näher gekennzeichneten Leitungen in allen Fällen nur Einfachleitungen bzw. Ein-Kanalleitungen sind. Vielmehr können diese je nach Bedarf sowohl Einfach- als auch Mehrfachleitungen sein.

Von dem Seriell/Parallelwandler 2 werden die Daten über eine Achtfachleitung 3 an eine Busleitung 4 weitergegeben, an welcher die Sendereingänge einer Anzahl von Chips 100 angeschlossen sind. Eine Steuerleitung 5 steuert den Eingang des Chips 100, damit dieser den jeweils in der Busleitung anstehenden Datensatz, der für den betreffenden Übertragungskanal 20' vorgesehen ist, aufnimmt. In dem dargestellten Beispiel wird jeweils ein Byte parallel über die Leitung 3 in die Busleitung 4 übergeben und jeweils von einem der Chips 100 aufgenommen, wobei entsprechend einer fest vorgegebenen Reihenfolge jeweils ein Byte in einen der Chips 100 eingelesen wird. Der Sender des Chips 100 übermittelt dieses Byte innerhalb einer vorgegebenen Rahmenstruktur, die ebenfalls von dem Chip 100 erzeugt wird, über den zugehörigen Kanal 20' an den Empfängereingang 40 eines identisch aufgebauten Chips 100 auf der Empfängerseite.

Die von dem Empfänger 30 des Chips 100 empfangenen Daten werden in acht Bit Breite an einen FIFO-Speicher 50 übergeben, dessen Ausgang wiederum mit einer Busleitung 4' verbunden ist, von wo die Daten über eine acht Bit breite Leitung 3' an einen Parallel/Seriellwandler 2' übergeben und zur weiteren Verarbeitung oder Speicherung in die serielle Leitung 1' ausgegeben werden.

Dabei wird über Steuerleitungen 5' wiederum die Reihenfolge des Auslesens der FIFO-Speicher, die byteweise erfolgt, (d.h. bei einem Auslesevorgang wird jeweils ein Bit aus den acht Speicherkanälen des FIFOs 50 entnommen,) so gewählt, daß sie genau der Reihenfolge des Einlesens in die Chips 100 auf der Empfängerseite entspricht, die denselben Übertragungskanälen 20' zugeordnet sind, wie die entsprechenden FIFO-Speicher 50.

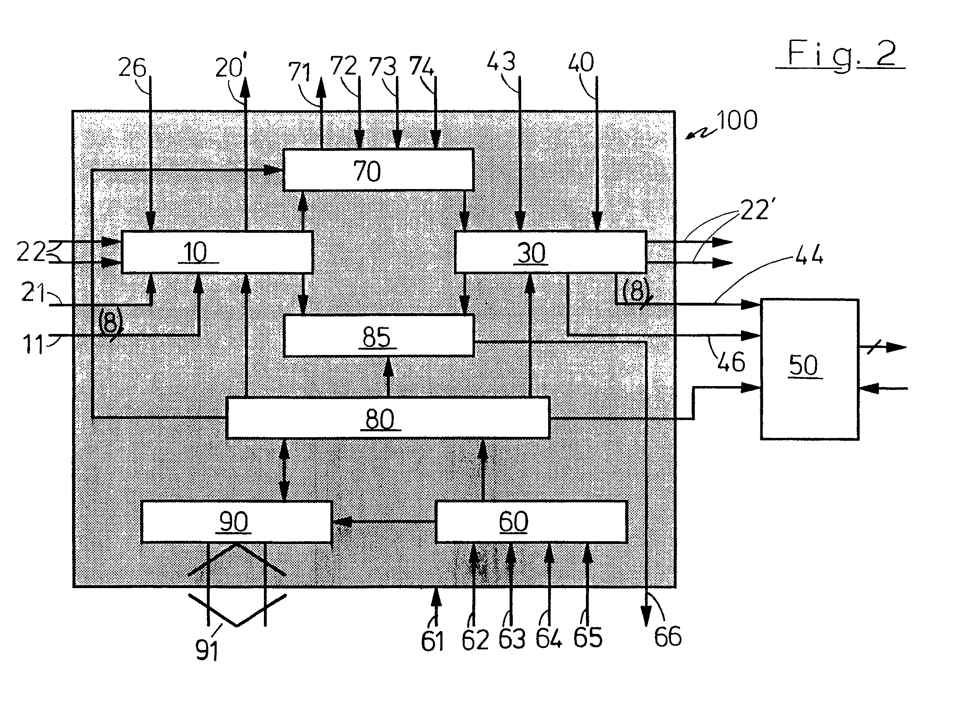

Im folgenden wird auch auf die Figuren 2 bis 4 Bezug genommen. Der in Figur 2 dargestellte Chip 100 enthält verschiedene Baugruppen wie einen Sender 10, einen Empfänger 30, eine Adreßlogik 60 und einen Datenbus 90 für Steuerdaten. Die Bezugszahl 80 bezeichnet ein Steuer- und Statusregister, 85 ist eine Unterbrechungslogik (interrupt logic) und 70 bezeichnet ein ST-Businterface, welches speziell für die Anwendung an einem ISDN-Netz vorgesehen ist. Daten werden von der Busleitung 4 über die Eingangsleitung 11 in den Speicher 12 des Senders 10 eingelesen, wenn über die Leitung 5 ein entsprechender Lesebefehl an den Lesesteuereingang 21 des Senders 10 gegeben wird. 22 bezeichnet zwei nicht benutzte Eingangskanäle ebenso wie 22' entsprechende nicht benutzte Ausgangskanäle des Empfängers 30 bezeichnet. 26 ist der Takteingang des Senders 10, welcher die Taktfrequenz vorgibt, mit welcher die Daten über den Ausgang 20 auf den Übertragungskanal 20' gegeben werden.

Nach dem Durchlaufen der Übertragungsstrecke gelangen die Daten an den Empfänger 30 eines mit dem vorbeschriebenen Chip vollständig identischen Chips und zwar über den Eingang 40, wobei der Ausgangstakt des senderseitigen Ausganges 26 nunmehr als Eingangstakt für den empfängerseitigen Takteingang 43 Verwendung findet. Der Empfänger 30 gibt die empfangenen Daten weiter an ein FIFO 50, wobei ein Steuereingang 46 dafür vorgesehen ist, daß nur die zu übermittelnden Daten an den FIFO-Speicher 50 übergeben werden und nicht etwa Steuerinformationen entsprechend einer vom Sender 10 übermittelten und vom Empfänger 30 empfangenen Rahmenstruktur.

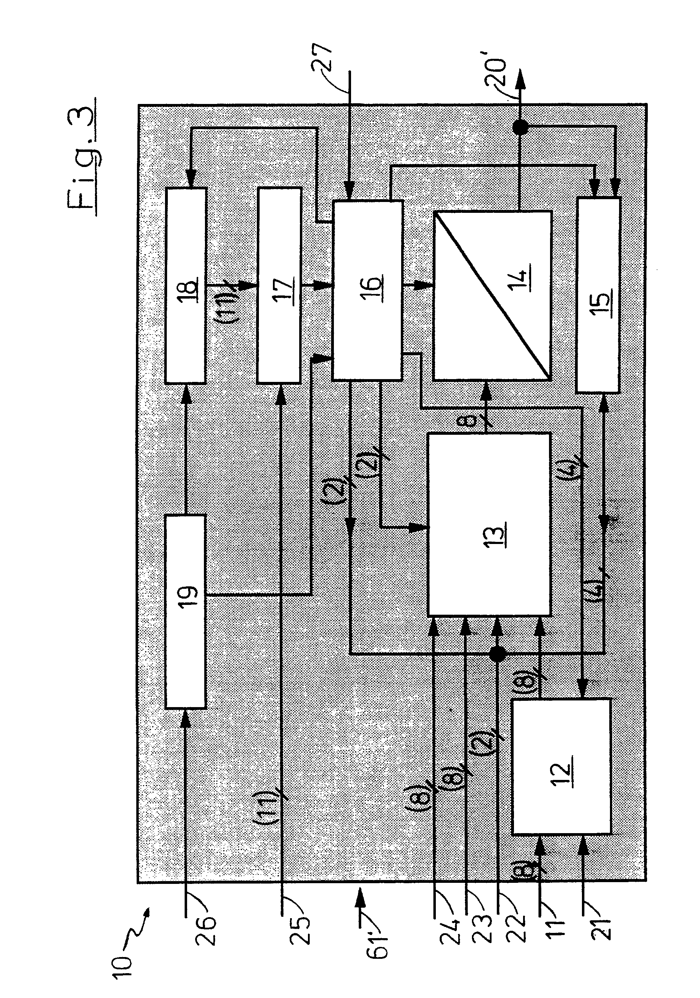

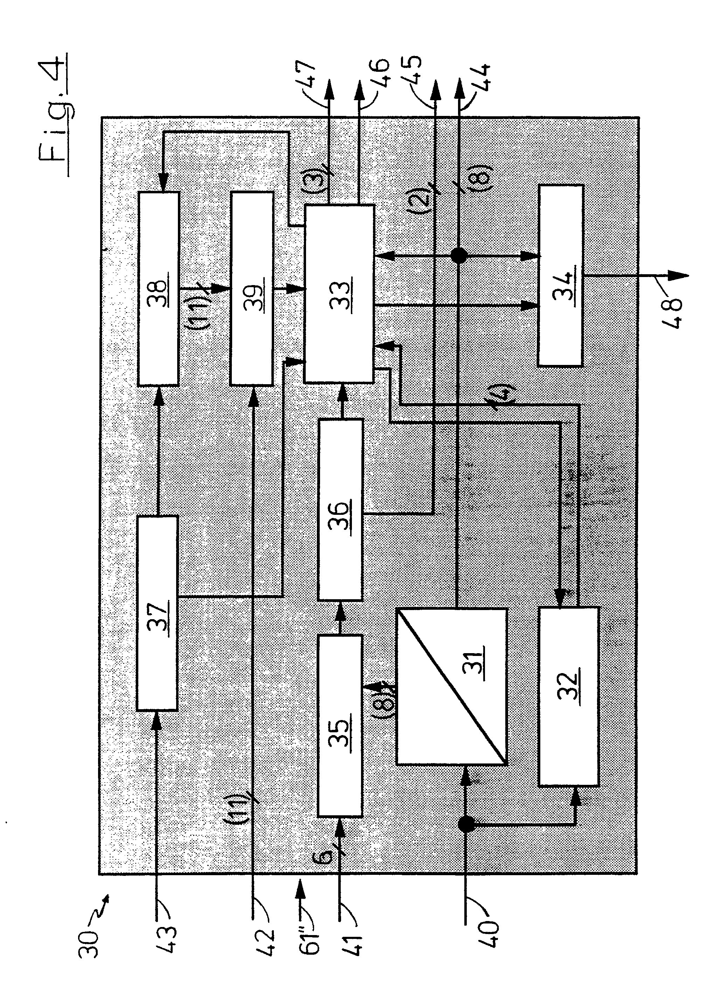

Die Figuren 3 und 4 zeigen schematisch den inneren Aufbau von Sender und Empfänger, wobei auch die Verbindungen zu den anderen inneren Bauelementen des Chips 100 dargestellt sind. Die Daten gelangen also über den Eingang 11 entsprechend dem über 21 eingegebenen Lesebefehl in einen internen FIFO-Speicher 12 von acht Bit Breite und sieben Bit Tiefe. Von dort gelangen die Daten in einen Multiplexer 13, der die Daten noch mit der vorgesehenen Rahmenstruktur versieht, anschließend werden sie an einen Parallel/Seriellwandler 14 übergeben, der schließlich die Daten über den Ausgang 20 seriell an den Übertragungskanal 20' abgibt. Zur Erzeugung der Rahmenstruktur werden dem Multiplexer 13 weitere Daten von dem Steuer- und Statusregister 80 über die Leitungen 23 und 24 direkt und indirekt über die Leitung 25 und den Komparator 17 und die Sendesteuerung 16 zugeführt. Der Übertragungstakt wird über die Leitung 26 auf einen 3-Bit-Zähler 19 und einen 11-Bit-Zähler 18 gegeben. 3-Bit-Zähler 19, 11-Bit-Zähler 18 und Komparator 17 dienen in erster Linie dazu, die Wortlänge von einem Byte und die gesamte Rahmenlänge von etwa 1 kB (1.024 Byte) festzulegen und zu erkennen.

Insgesamt haben die über einen Übertragungskanal 20' übermittelten Daten die folgende Rahmenstruktur:

-SYNC-Daten (255 Byte)-PSW-Daten-SSB-Daten-SBDB-Daten-.

Dabei ist der Rahmen gegeben durch die jeweils ein Byte langen Bestandteile SYNC, PSW, SSB und SBDB, wobei letzteres gegebenenfalls auch entfallen oder zwei Byte lang sein kann.

Die dazwischenliegenden Datenblöcke für die zu übermittelnden Daten sind jeweils 255 Byte lang mit Ausnahme des letzten Blockes, der auch 254 oder 256 Byte lang sein kann. Die gesamte Rahmenlänge beträgt 1024 Byte.

Dabei bezeichnet SYNC ein sechs Bit langes Synchronisationsmuster und von den verbleibenden Bits dient eines zur Anzeige des Synchronisationszustandes und eines als Ausrichtsignal.

PSW ist die Abkürzung für Prozessor Status Wort und dient für den Informationsaustausch zwischen den Steuerschaltkreisen, welche die einzelnen Sender und Empfänger steuern.

Von dem mit SSB bezeichneten Byte werden zwei Bit für die Angabe der Anzahl von Stopfbytes verwendet, vier Bits dienen der Fehlererkennung und zwei Bits werden als Funktionsbits unverändert (transparent) übermittelt.

SBDB ist die Abkürzung für Stopfbyte oder Datenbyte, wobei hier entsprechend der in SSB vorgesehenen Anzahl entweder kein Stopfbyte und stattdessen ein Datenbyte vorgesehen ist, so daß der letzte Block dann 256 Byte lang ist, oder aber ein oder zwei Stopfbytes vorgesehen werden, so daß der letzte Datenblock entsprechend 255 oder 254 Byte lang ist. Dies dient dem Ausgleich von Taktfrequenzunterschieden in den verschiedenen Übertragungskanälen 20'. Grundsätzlich haben zwar alle Übertragungskanäle die gleiche Taktfrequenz; in Einzelfällen können jedoch kleine Differenzen der Taktfrequenz verschiedener Übertragungskanäle vorkommen. Die Sendesteuerung 16 erhält über den 3-Bit-Zähler 19 den Übertragungstakt zum Auslesen bzw. Senden der Daten von dem Parallel/Seriellwandler 14 in die Übertragungsleitung 20'. Unabhängig davon wird entsprechend dem an der Busleitung 4 auftretenden Datenanfall entsprechend dem dortigen Takt in den FIFO-Speicher 12 eingelesen. Es versteht sich, daß der Takt in der Busleitung 4 mit dem Takt in **einem** der Übertragungskanäle fest verknüpft ist, wobei die Taktfrequenz in der Busleitung 4 bei der Verwendung von n Übertragungskanälen genau n mal so groß wie die Taktfrequenz in den jeweiligen Kanälen ist. Die Verknüpfung der Taktfrequenz in der Busleitung mit dem Takt in einem der Übertragunskanäle erfolgt über einen Frequenzvervielfacher 110, für welchen hier eine PLL-Schaltung 110 (Phase Locked Loop, Phasenregelkreis) vorgesehen ist.

Ist nun jedoch in einem der Kanäle die Taktfrequenz beispielsweise etwas kleiner als in den übrigen Kanälen, so werden in den entsprechenden FIFO-Speicher 12 die Daten allmählich schneller eingelesen als ausgelesen, da das Auslesen entsprechend dem Ausgangtakt an der Leitung 26 erfolgt, während das Einlesen entsprechend dem von der Busleitung vorgegebenen Takt über den Steuerkanal 21 geregelt wird. Stellt nun die Sendesteuerung 16 fest, daß der FIFO-Speicher 12 aufgrund des schnelleren Einlesens allmählich voller wird als vorgesehen, so wird über SSB die Zahl der Stopfbytes auf Null gesetzt und der Multiplexer sieht nunmehr vor, daß im letzten Block des Rahmens das ansonsten vorgesehene Stopfbyte entfällt und stattdessen ein Datenbyte übermittelt wird. Es kann also nunmehr ein zusätzliches Byte aus dem FIFO-Speicher 12 ausgelesen werden, so daß dieser wieder den gewünschten, vorzugsweise halbvollen Zustand (in der Tiefe vier Bit) erreicht.

Ist die Auslesefrequenz des Senders hingegen größer als die Eingabefrequenz am Eingang, so wird der FIFO-Speicher 12 stärker entleert als dies dem gewünschten, beispielsweise genau halbvollen Zustand entspricht. In diesem Falle veranlaßt die Sendesteuerung 16 den Multiplexer 13 dazu, ein zusätzliches Stopfbyte (also zwei Stopfbytes anstelle von üblicherweise einem Stopfbyte) in den letzten Block einzufügen, so daß dieser nur noch 254 Datenbytes enthält, so daß nunmehr ein Byte weniger aus dem FIFO-Speicher 12 ausgelesen wird, welcher so wieder den halbvollen Zustand erreicht. Es versteht sich, daß bei der vorgegebenen Rahmenlänge mit einem solchen System lediglich Schwankungen der Taktfrequenzen bis zu 1/1000 ausgeglichen werden können, wobei jedoch prinzipiell auch mit Hilfe einer größeren Anzahl von Stopfbytes oder bei kürzeren Rahmenstrukturen größere Schwankungen ausgeglichen werden können. In der Praxis bewegen sich die auftretenden Schwankungen, sofern sie nicht ohnehin ausgeschlossen sind, im Bereich unterhalb von 1/1000.

Ein Scrambler 15 erfaßt die ausgegebenen Daten am Ausgang 20 und erzeugt hieraus eine Kontrollsequenz aus vier Bits, welche ebenfalls in SSB enthalten sind und eine Fehlererkennung ermöglichen. Die vier (bzw. drei oder fünf) den Rahmen bildenden Bytes SYNC, PSW, SSB und SBDB werden von dem Multiplexer 13 zwischen die Datenblöcke von jeweils 255 Byte Länge eingefügt.

Auf der Empfängerseite gelangen die Daten über den Eingang 40 in den Seriell/Parallelwandler 31 und werden auch gleichzeitig von einem Scrambler 32 erfaßt, der sie entsprechend der übermittelten Kontrollsequenz in SSB auf Fehler überprüft. Von dem Seriell/Parallelwandler 31 werden die übermittelten Daten unmittelbar auf die Ausgangsleitung 44 zur Busleitung 4', gleichzeitig jedoch auch an einen Synchronisationsvergleicher 35, an eine Empfangssteuerung 33 und ein Register für das PSW-Byte übergeben. Die Empfangssteuerung regelt nunmehr den Zugang zu dem zugehörigen FIFO über den Ausgang 46, so daß nur die Datenbytes, nicht aber die den Rahmen definierenden Bytes in den FIFO-Speicher 50 eingelesen werden. Außerdem erfaßt die Empfangssteuerung noch den Zustand der Synchronisation von der Zustandsanzeige 36 und dem Synchronisationsvergleicher 35. Rahmenlänge und Wortlänge werden wiederum über den Komparator 19 erfaßt und kontrolliert, wobei 37 und 38 wiederum ein 3-Bit-Zähler bzw. ein 11-Bit-Zähler sind. Über die Leitung 47 können gegebenenfalls Fehlermeldungen ausgegeben werden.

Der Komparator 39 des Empfängers erhält über die Leitung 42 ebenso wie der Komparator 17 des Senders über die Leitung 25 genaue Rahmeninformationen aus dem Steuer- und Statusregister 80 des Chips 100.

Mit 61, 61' und 61'' wird ein Reset-Eingang bezeichnet, welcher alle Bauelemente in einen Anfangszustand versetzt.

Bei Inbetriebnahme der Vorrichtung übermittelt der Sender 10 zunächst nur Leerdaten, die jedoch schon mit der vorgesehenen Rahmenstruktur versehen sind. Diese Leerdaten sind z.B. dadurch gekennzeichnet, daß alle Datenbits auf logisch 1 gesetzt sind. Nachdem von der Empfängerseite her die Empfangsbereitschaft signalisiert worden ist, erfolgt über die Busleitung 4 die Eingabe von zu übermittelnden Daten in die Eingangs-FIFO's 12, welche in dem konkret dargestellten Beispiel eine Tiefe von 7 Bit haben und 8 Bit breit sind. Sobald alle FIFO's 12 der nacheinander beschickten Chips 100 halbvoll, d.h. bis auf eine Tiefe von 4 Bit, gefüllt sind, werden aus allen Chips 100 gleichzeitig das Ausrichtsignal und unmittelbar anschließend die in den Eingangs-FIFO's gespeicherten Daten gesendet. Die Sendung der Daten erfolgt in dem Takt, der von der jeweiligen Übertragungsleitung 20' vorgegeben ist.

Über eine PLL-Schaltung (Phase Locked Loop-Schaltung) wird die Taktfrequenz einer dieser Übertragungsleitungen vervielfacht und als Taktfrequenz in den Steuerschaltkreis 200 gegeben, der mit einem Takt entsprechend dieser vervielfachten Frequenz die Daten in die Busleitung 4 gibt. Der Vervielfachungsfaktor entspricht der Zahl der verwendeten Kanäle bzw. der Zahl der entsprechenden Chips 100, abzüglich der für die Rahmenstruktur benötigten Bandbreite.

Grundsätzlich sollten alle Datenübertragungsleitungen 20' exakt die gleiche Taktfrequenz haben, etwaige kleine Unterschiede werden jedoch durch die bereits beschriebenen Stopfbytes ausgeglichen, die immer dann eingesetzt oder fortgelassen werden, wenn die "kurzen" Einlese-FIFO's nicht mehr in dem gewünschten Füllzustand - vorzugsweise halbvoll - sind. Diese Einlese-FIFO's 12 haben jedoch nichts mit dem Ausgleich der unterschiedlichen Übertragungsgeschwindigkeiten zu tun, welcher letztlich erst mit Hilfe der Auslese-FIFO's 50 bewerkstelligt wird.

Sende- und Empfangssystem sind vorzugsweise völlig symmetrisch aufgebaut, so daß dieselben Chips 100 sowohl die entsprechenden Sende- als auch die Empfangseinrichtungen aufweisen. Ankommende Daten gelangen über die Eingangsleitung 40 in den Empfänger 30. Nachdem in dem vorgesehen Rahmen zunächst Leerdaten übermittelt worden sind, beginnt die eigentliche Datenübertragung mit dem Empfang eines Ausrichtsignales in einem Empfänger 30. Nach dem Empfang des Ausrichtsignales beginnt der Chip 100 sofort damit, die auf das Ausrichtsignal folgenden Daten in den entsprechenden FIFO 50 einzugeben. Wie bereits beschrieben, werden dabei die eigentlichen Daten von der mitübertragenen Rahmenstruktur getrennt. Der Empfang des Ausrichtsignales wird über einen getrennten Kanal 211 an den Ausrichtteil 210 des Steuerschaltkreises 200 übermittelt. Erst nachdem der Ausrichtteil 210 von **sämtlichen** verwendeten Chips 100 den Empfang der Ausrichtsignale über die Steuerleitungen 211 registriert hat, steuert der Steuerschaltkreis 200 über die Leitungen 212 die einzelnen FIFO's zum Auslesen der Daten entsprechend einer vorgegebenen Reihenfolge an. Dabei können in den einzelnen FIFOs 50 entsprechend der unterschiedlichen Übertragungsgeschwindigkeiten in den einzelnen Kanälen 20' durchaus unterschiedliche Datenmengen gespeichert sein. Beispielsweise können also in einem der FIFOs 50 schon 20 "Worte" bzw. Bytes gespeichert sein, bevor in einem anderen Kanal 20' das Ausrichtsignal und nachfolgend das erste Datenwort (Byte) in dem zugehörigen FIFO 50 ankommt. Die Daten gelangen dann über die Busleitung 4', 3' in den Steuerschaltkreis 200 und werden von dort an eine Datenverarbeitungseinrichtung bzw. einen Speicher weitergegeben.

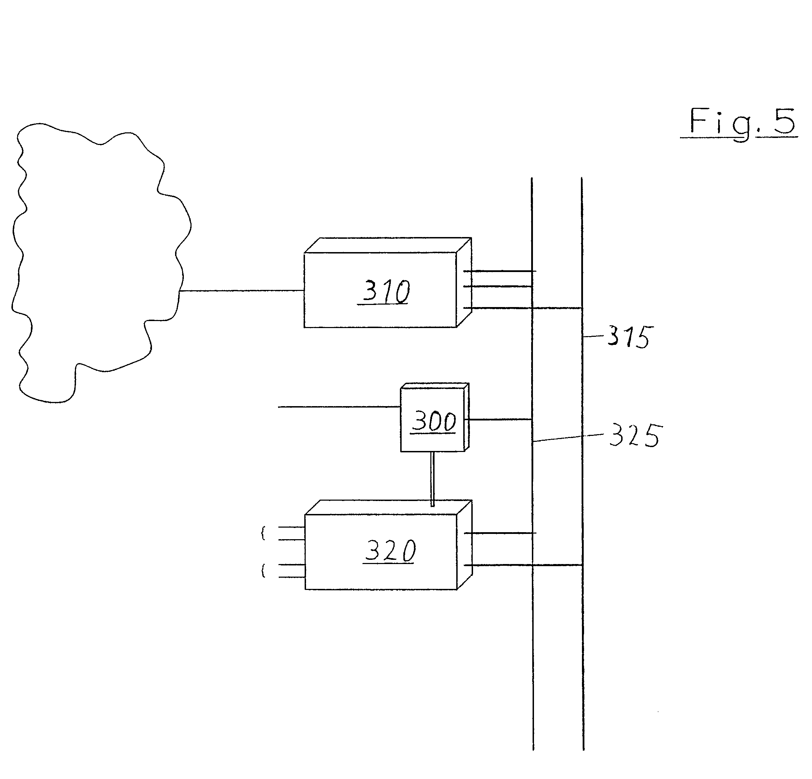

In Figur 4 ist schematisch die Anwendung der erfindungsgemäßen Prinzipien auf ein ISDN-Netz (Integrated Services Digital Network) dargestellt. Das ISDN-Netz erfordert ohnehin sogenannte "Interface-Karten" oder ISDN-Module, welche bereits einen Teil der Funktionen der Chips 100 und des Steuerschaltkreises 200 der vorher beschriebenen Ausführungsform übernehmen. Von den in Figur 4 dargestellten Blöcken werden die ISDN-Karte 310 und der ICM-Modul 320 auch schon in bekannten Systemen verwendet. Gemäß der vorliegenden Erfindung wird jedoch zusätzlich eine Baugruppe 300 eingesetzt, dessen einzelne Funktionselemente besser in Figur 5 zu erkennen sind. Der Begriff "Baugruppe" ist hier funktionell zu verstehen und nicht etwa in dem Sinne, daß alle ihre Bestandteile einstückig miteinander verbunden sein müßten.

Wie man in Figur 5 erkennt, sind die FIFO-Speicher 50, von welchen insgesamt 32 Stück vorgesehen sind, über ein zwischengeschaltetes Schieberegister 330 mit der ST-Busleitung 315 am Ausgang der ISDN-Karten 310, 311 verbunden. Das Schieberegister 330 dient im wesentlichen als Seriell/Parallelwandler, da die FIFO-Speicher 50 wiederum in 8 Bit Breite speichern. Die Speichertiefe bzw. -kapazität der FIFO-Speicher 50 liegt in der Größenordnung von 1 KBit bzw. 1 KByte, wobei es hierauf jedoch nicht wesentlich ankommt, solange die FIFO's nur ausreichend tief sind, um alle vorkommenden Laufzeitunterschiede in den einzelnen Kanälen sowie etwaige Schaltverzögerungen aufzufangen.

Das Trennen von Rahmenstruktur und reinen Übertragungsdaten wird in der ISDN-Karte 310 und auch in der ISDN-Karte 311 vorgenommen, wobei die ISDN-Karte 310 mit insgesamt 30 Datenleitungen mit einer Übertragungsrate von je 64 kbaud (Kilobit/Sekunde) und einer Steuerleitung mit 64 kbaud verbunden ist. Die ISDN-Karte 311 ist mit 2 Datenleitungen von 64 kbaud und einer Steuerleitung von 16 kbaud verbunden. Die Steuereinheit 350 übernimmt teilweise die Funktion des Steuerschaltkreises 200 in der vorher beschriebenen Ausführungsform. Die Steuereinheit 350 überwacht beispielsweise den Empfang der Ausrichtsignale, so daß unmittelbar im Anschluß daran Daten in die FIFO-Speicher 50 eingeschrieben werden. Das Auslesen erfolgt unter Ansteuerung durch die Steuereinheit 350 wiederum erst dann, wenn in allen benutzten Kanälen das Ausrichtsignal empfangen worden ist. Informationen über die Anzahl der benutzten Kanäle werden über die zusätzlichen Steuerleitungen übermittelt, mit welchen die ISDN-Karten 310 bzw. 311 verbunden sind.

Der Takt von der ST-Busleitung, mit welchem in die FIFOs eingelesen wird, wird über einen Frequenzvervielfacher 110 hochtransformiert und entsprechend der Anzahl der benutzten Kanäle geteilt und zur Datenverarbeitungseinrichtung weitergegeben. Dieser Takt wird dann zum Auslesen der FIFO-Speicher 50 verwendet, so daß die Daten insgesamt aus den FIFO-Speichern 50 genauso schnell ausgelesen wie eingeschrieben werden. Lediglich der Füllgrad der einzelnen FIFO's kann unterschiedlich sein entsprechend den unterschiedlichen Laufzeiten in den einzelnen Übertragungskanälen.

Im Sender gelangen die Daten von einer entsprechenden Einrichtung über ein Schieberegister in ein FIFO 355, welches als Pufferspeicher dient, wobei die Steuereinheit 350 dann das Ausrichtsignal abgibt, welches im wesentlichen gleichzeitig in allen benutzten Kanälen von den ISDN-Karten ausgesendet wird.

Mit der vorliegenden Erfindung können also zu übermittelnde Daten auf nahezu beliebig viele einzelne Übertragungsleitungen bzw. Übertragungsstrecken verteilt, gesendet und empfangen und in der richtigen Reihenfolge wieder zusammengesetzt werden, wobei der apparative Aufwand recht gering bleibt und wobei die wesentlichen Funktionen unmittelbar durch die einzelnen Geräte bzw. Baugruppen ausgeführt werden (fest verdrahtet) und nicht aus einer Software-Verarbeitung bestehen. Das System ist dabei äußerst flexibel und kann wahlweise auf eine beliebige Anzahl von Übertragungskanälen beschränkt bzw. erweitert werden, so daß sich hieraus insoweit Kostenvorteile ergeben, als die Übertragung über eine kleine Anzahl von Einzelleitungen oft billiger ist als die Übertragung über ein größeres Leitungssystem, welches nur en bloc zu haben ist und eine größere Kapazität hat als eigentlich benötigt wird.

Bezugszeichenliste

| | |
|---|---|
| 1,1' | Eingangsleitung, serielle Leitung |
| 2,2' | Parallel/Seriellwandler |
| 3,3' | Achtfachleitung |
| 4,4' | Busleitung |
| 5,5' | Steuerleitung |
| 10 | Sender, Speicher |
| 11 | Eingangsleitung |
| 12 | interner FIFO-Speicher, Einlese-FIFO's |
| 13 | Multiplexer |
| 14 | Parallel/Seriellwandler |
| 15 | Scrambler |
| 16 | Sendesteuerung |
| 17 | Komparator |
| 18 | 11-Bit-Zähler |
| 19 | 3-Bit-Zähler |
| 19 | Komparator |
| 20' | Übertragungskanal |
| 20' | Ausgangsleitung |
| 21 | Steuerkanal |
| 21 | Lesesteuereingang |
| 22 | nicht benutzte Eingangskanäle |
| 22' | nicht benutzte Ausgangskanäle |
| 23,24 | Leitungen |
| 25 | Leitung |
| 26 | Takteingang des Senders |
| 26 | Leitung |
| 30 | Empfänger |
| 31 | Seriell/Parallelwandler |
| 32 | Scrambler |
| 33 | Empfangssteuerung |
| 35 | Synchronisationsvergleicher |
| 36 | Zustandsanzeige |
| 37 | 3-Bit-Zähler |
| 38 | 11-Bit-Zähler |
| 39 | Komparator |
| 40 | Empfängereingang |

| | |
|---|---|
| 42 | Leitung |
| 43 | empfängerseitiger Takteingang |
| 44 | Ausgangsleitung |
| 46 | Steuereingang |
| 46 | Ausgang |
| 47 | Leitung |
| 50 | FIFO-Speicher, Auslese-FIFO's |
| 60 | Adreßlogik |
| 61,61',61" | Reset-Eingang |
| 70 | ST-Businterface |
| 80 | Steuer- und Statusregister |
| 85 | Unterbrechungslogik |
| 90 | Datenbus |
| 100 | Chips |
| 110 | PLL-Schaltkreis (Phase Locked Loop), Frequenzvervielfacher |
| 200 | Steuerschaltkreis |
| 210 | Ausrichtteil |
| 211 | Kanal |
| 212 | Leitungen |
| 300 | Baugruppe |
| 310 | ISDN-Karte |
| 311 | ISDN-Karte |
| 315 | ST-Busleitung |
| 320 | ICM-Modul |
| 330 | Schieberegister |
| 350 | Steuereinheit |
| 355 | FIFO |

**Patentansprüche**

1. Verfahren zur Fernübertragung von Daten, bei welchem zur Erhöhung der Übertragungsgeschwindigkeit in einem Eingangskanal (1) anstehende Daten auf mindestens zwei Übertragungskanäle (20') jeweils begrenzter Übertragungskapazität aufgeteilt, entlang der Übertragungsstrecke übermittelt, synchronisiert empfangen und in der ursprünglichen Anordnung in einen Ausgabekanal (3') gegeben werden, der seinerseits mit einem Speicher oder einer Datenverarbeitungseinrichtung verbunden ist, dadurch gekennzeichnet, daß in allen Übertragungskanälen (20') in fester relativer Zeitbeziehung ein Ausrichtsignal gesendet wird, welchem die Übertragung von Datensignalen folgt, wobei die sich beim Empfang des Ausrichtsignales ergebenden Laufzeitunterschiede in den verschiedenen Übertragungskanälen (20') dadurch berücksichtigt werden, daß nach dem Empfang eines Ausrichtsignales in einem Übertragungskanal (20') die in diesem Übertragungskanal (20') folgenden Daten in einen FIFO-Speicher (50) (First In First Out-Speicher) eingelesen und entsprechend der senderseitig festgelegten Reihenfolge erst dann aus den FIFO-Speichern (50) ausgelesen werden, wenn in allen benutzten Übertragungskanälen (20') das Ausrichtsignal empfangen worden ist.

2. Verfahren nach Anspruch 1, dadurch gekennzeichnet, daß das Ausrichtsignal in allen Übertragungskanälen (20') im wesentlichen gleichzeitig gesendet wird und daß die Übertragung der zu übermittelnden Daten unmittelbar auf das Senden des Ausrichtsignales folgt.

3. Verfahren nach Anspruch 1 oder 2, dadurch gekennzeichnet, daß die Daten in einer Rahmenstruktur übertragen werden, welche mindestens das Ausrichtsignal und ein Kontrollsignal enthält.

4. Verfahren nach Anspruch 3, dadurch gekennzeichnet, daß die Rahmenstruktur ein Synchronisiersignal enthält.

5. Verfahren nach Anspruch 3 oder 4, dadurch gekennzeichnet, daß die Rahmenstruktur weiterhin Steuerdaten für sender- oder empfängerseitige Mikroprozessoren bzw. Steuerschaltkreise, Signale zum Anzeigen von Differenzen der Taktfrequenz in verschiedenen Übertragungskanälen und gegebenenfalls Leerdaten zum Ausgleich von Taktfrequenzdifferenzen aufweist.

6. Verfahren nach Anspruch 5, dadurch gekennzeichnet, daß die in einem Übertragungskanal übertragenen Daten jeweils in vier verschiedenen Blöcken von je 256 Byte Länge übertragen werden, wobei das erste Byte eines ersten Blockes das Synchronisierungssignal und das Ausrichtsignal enthält und wobei das erste Byte eines weiteren Blockes als Zustandsanzeige- und Unterbrechungssignal für einen Steuerschaltkreis dient.

7. Verfahren nach Anspruch 6, dadurch gekennzeichnet, daß das erste Byte eines dritten Blockes eine Anzahl von Leerdatenbytes angibt und daß maximal die ersten zwei Bytes eines vierten Blockes, welcher in der Reihenfolge der vier Blöcke hinter dem dritten Block liegt, Leerdaten enthalten, wobei das erste Byte des dritten Blockes gegebenenfalls zusätzlich Kontrolldaten zur Fehlerregistrierung enthält.

8. Vorrichtung zur Fernübertragung von Daten, bei welcher eine Aufteilung der in einem Eingangskanal (1) anstehenden Daten auf mindestens zwei Übertragungskanäle (20') jeweils begrenzter Übertragungskapazität erfolgt, mit mindestens einem Datensender (10) und mindestens einem Datenempfänger (30) und mit je einem Interface (2) zur Verbindung einer Datenverarbeitungs- bzw. Speichereinrichtung (6) mit dem Übertragungsnetz, mit einer Frequenzvervielfacher-Schaltung (110) zur Frequenzvervielfachung und mit mindestens einem Elektronikbaustein (100) zur Datenformatierung, dadurch gekennzeichnet, daß eine senderseitige Einrichtung (80, 90) vorgesehen ist, von welcher in alle Kanäle (20') in fester Zeitbeziehung und vorzugsweise gleichzeitig ein Ausrichtsignal ausgebbar ist,
daß empfängerseitig für jeden Kanal (10) FIFO-Speicher (50) als Zwischenspeicher vorgesehen sind, wobei eine Einrichtung (200, 210, 300) für das Erfassen des Ausrichtsignales vorgesehen ist, und daß weiterhin eine Einrichtung (200, 300) vorgesehen ist, welche unter Ansprechen auf das Erfassen des Ausrichtsignales in allen benutzten Übertragungskanälen (20') durch die Erfassungseinrichtung (200, 210, 300) ein Steuersignal zum Auslesen des Inhaltes der FIFO-Speicher entsprechend einer vorgegebenen Reihenfolge abgibt.

9. Vorrichtung nach Anspruch 8, dadurch gekennzeichnet, daß Sender (10), Empfänger (30) und Steuerelemente (60, 70, 80, 85, 90) gemeinsam auf einem integrierten Elektronikbaustein (Chip 100) angeordnet sind.

10. Vorrichtung nach Anspruch 8 oder 9, dadurch gekennzeichnet, daß sender- und empfängerseitig je ein integrierter Schaltkreis (100) für jeden Übertragungskanal vorgesehen ist, der einen Sender (10) und einen Empfänger (30) mit je einem Dateneingang (11, 40) und einem Datenausgang (20', 44) aufweist, einen Takteingang (26) für den Ausgang (20') des Senders, einen Takteingang (43) für den Eingang (40) des Empfängers und Ein -bzw. Ausgänge für Steuerdaten aufweist.

11. Vorrichtung nach Anspruch 10, dadurch gekennzeichnet, daß jeder Empfängerausgang (44) mit einem FIFO-Speicher (50) verbunden ist.

12. Vorrichtung nach einem der Ansprüche 8 bis 11, dadurch gekennzeichnet, daß der Sender (10) einen Parallel/Seriellwandler (14) und der Empfänger (30) einen Seriell/Parallelwandler (31) aufweist.

13. Vorrichtung nach Anspruch 8, dadurch gekennzeichnet, daß die FIFO-Speicher (50) an eine ISDN-Busleitung (310) angeschlossen sind, wobei eine von den FIFO's (50) getrennte Steuereinheit (300) ebenfalls an den ISDN-Bus (310) sowie an eine Steuerleitung (320) angeschlossen ist, für den Empfang der Ausrichtsignale ausgelegt ist und das Auslesen der FIFO's ansteuert.

14. Vorrichtung nach Anspruch 13, dadurch gekennzeichnet, daß zwischen Busleitung (310) und FIFO-Speichern (50) ein Schieberegister (330) angeordnet ist.

Fig. 1

EP 0 461 445 A2

Fig. 2

Fig.3

Fig. 4

Fig.5

16

Fig. 6

EP 0 461 445 A2